(19) Europäisches Patentamt

European Patent Office

Office européen des brevets

(11) EP 0 916 541 A1

(12) EUROPEAN PATENT APPLICATION
published in accordance with Art. 158(3) EPC

(43) Date of publication:
19.05.1999 Bulletin 1999/20

(51) Int. Cl.$^6$: B60K 17/356

(21) Application number: 97933856.3

(86) International application number:
PCT/JP97/02657

(22) Date of filing: 31.07.1997

(87) International publication number:
WO 98/04428 (05.02.1998 Gazette 1998/05)

(84) Designated Contracting States:
DE

(30) Priority: 31.07.1996 JP 218019/96

(71) Applicant: KOMATSU LTD.
Minato-ku Tokyo 107 (JP)

(72) Inventor: KANAYAMA, Noboru
Komatsu-shi, Ishikawa 923-03 (JP)

(74) Representative:
Viering, Jentschura & Partner
Postfach 22 14 43
80504 München (DE)

(54) TRAVELLING EQUIPMENT FOR HYDRAULIC FOUR-WHEEL DRIVE VEHICLE

(57) A travelling equipment for hydraulic four-wheel drive vehicles which provides a stable traction and travelling speed even in travelling on a bumpy road surface, offers a long service life for hydraulic equipment, and is economical. The equipment, having a variable displacement hydraulic pump and front and rear wheel side hydraulic motors, comprises a closed center type front wheel side directional switching valve (3F) provided for the front wheel side hydraulic motor (2F), a closed center type rear wheel side directional switching valve (3R) provided for the rear wheel side hydraulic motor (2R), pump flow rate control means for controlling a pump discharge oil quantity so as to maintain differential pressures across the respective directional switching valves (3F, 3R) constant, and a communication valve (5) provided between an oil passage (4F) extending from the front wheel side directional switching valve to the front wheel side hydraulic motor and an oil passage (4R) extending from the rear wheel side directional switching valve to the rear wheel side hydraulic motor to provide communication or shut-off between these oil passages.

FIG. I

EP 0 916 541 A1

## Description

TECHNICAL FIELD

The present invention relates to a traveling equipment for a hydraulic four-wheel drive vehicle provided with a hydraulic motor for driving a front wheel and a hydraulic motor for driving a rear wheel which are rotated by hydraulic pumps.

BACKGROUND ART

A traveling equipment for a hydraulic four-wheel drive vehicle is structured such as to have a hydraulic pump and a front wheel side hydraulic motor and a rear wheel side hydraulic motor receiving a pressurized oil from the hydraulic pump so as to rotate and travel in a four-wheel drive, and the following technology has been suggested.

In Japanese Unexamined Patent Publication No. 3-103670, there is described a structure comprising a rear wheel side hydraulic motor directly receiving a pressurized oil from a variable volume type hydraulic pump and a front wheel side hydraulic motor receiving the pressurized oil via a communication valve, and further comprising suction and discharge prevention means for setting the communication valve at a shut-off position so as to travel in a two-wheel drive or setting the communication valve at a communication position so as to travel in a four-wheel drive, and further preventing a rotation due to a rotation of the front wheel from being transmitted to the front wheel side hydraulic motor so that the hydraulic motor sucks and discharges an operation fluid at a time of traveling in a two-wheel drive. That is, the communication valve is only switching means between a two-wheel drive and a four-wheel drive. Further, the hydraulic motors are fixed volume type hydraulic motors in both of the front and rear wheel sides.

In Japanese Unexamined Utility Model Publication No. 62-137129, there is described an apparatus comprising a rear wheel side hydraulic motor directly receiving a pressurized oil from a variable volume type hydraulic pump and a front wheel side hydraulic motor receiving the pressurized oil via a communication valve, in which the communication valve is set in a communication state to travel in a four-wheel drive when a speed change gear is in a low speed stage so as to obtain a high torque, and the communication valve is set in a shut-off state to travel in a two-wheel drive when the speed change gear is in a high speed stage so as to travel at a high speed. That is, the communication valve is switching means between a two-wheel drive and a four-wheel drive operated in response to the speed stage of the speed change gear. Further, the hydraulic motors are fixed volume type hydraulic motors in both of the front and rear wheel sides.

In Japanese Unexamined Utility Model Publication Nos. 5-37542 and 5-44661, there is described a structure structured such as to form a hydraulic drive circuit independent between front and rear wheels, comprising a hydraulic motor in a rear wheel side and a variable volume type hydraulic pump in the rear wheel side and a hydraulic motor in a front wheel side and a variable volume type hydraulic pump in the front wheel side, in which a pressure compensating valve for keeping a rear wheel drive hydraulic pressure and a front wheel drive hydraulic pressure in this hydraulic drive circuit at a fixed rate is further provided. Accordingly, there is described an apparatus for keeping a balance of a traction force between the front and rear wheels at a proper rate perform a stable traveling even when tire diameters and axial loads of the front and rear wheels are different. In this case, the front and rear wheels are structured such as to be mutually independent pump-motor systems, and have no communication valve.

However, there are problems as mentioned below in the prior arts mentioned above.

(1) Japanese Unexamined Patent Publication No. 3-103670 cancels a loss horse power of the front wheel side hydraulic motor transmitted from the front wheel at a time of the travel in the two-wheel drive by the rear wheel drive due to the means for setting the front wheel side hydraulic motor in a no-load state, however, the communication valve is simply the switching means between the two-wheel drive and the four-wheel drive. On the other hand, no specific structure is applied to a racing at a time of a four-wheel drive time.

(2) The communication valve in Japanese Unexamined Utility Model Publication No. 62-137129 is also the simple switching means between the two-wheel drive and the four-wheel drive. In this case, the communication valve is structured such as to communicate the communication valve when the speed change gear is in a low speed stage so as to travel in a four-wheel drive, so that a high torque can be obtained, however, no specific structure is applied to a racing at a time of a four-wheel drive time.

That is, in accordance with (1) and (2) publications, at a time of traveling in a four-wheel drive, a load against the front and rear wheels is different, for example, in view of a difference of the nature of the ground (a difference of coefficient of adhesion) between the front and rear wheels, whether or not a curve is present and a magnitude thereof, and a difference of a tire diameter and an abrasive state between the front and rear wheels even on a flat road surface. Particularly, in a construction machinery traveling on a bumpy road surface, load states of the front and rear wheels change during traveling in a four-wheel drive. For example, a case that any one of the front and rear wheels is floated up in an air so as to be in a no-load state is frequently generated. At this time, since a pressurized fluid flows into the hydraulic motor in a light load side so as to rotate it at a high speed, the hydraulic pressure is lowered. Further, when the wheel once floating up in the air so as to be in a no-load state is brought into contact with the grounded, a high load is suddenly applied thereto so as to suddenly reduce a speed of the hydraulic motor rotating at a high speed or suddenly stop the motor. Accordingly, there is a problem that a stable traction force and traveling speed can not obtained and a service life of a hydraulic equipment is short.

(3) Japanese Unexamined Utility Model Publication Nos. 5-37542 and 5-44661 are basically structured such as to have the front wheel side pump motor system and the rear wheel side pump motor system which are mutually independent. Then, a balance of a traction forces between the front wheel and the rear wheel is kept so as to maintain a stable traveling state by keeping a pressure for driving the rear wheel and a pressure for driving the front wheel in a constant rate, even when the tire diameters of the front and rear wheels are different and the axial loads are different. It is said that this corresponds to state fully the same as that of (1) and (2) publications in which a rate between the rear wheel drive hydraulic pressure and the front wheel drive hydraulic pressure is 1 to 1 (that is, the same pressure). Accordingly, in (3) publications, the problems mentioned in (1) and (2) publications mentioned above are generated. Further, it is uneconomical to respectively arrange the variable volume type hydraulic pump in the front and rear wheel sides only for keeping a constant rate.

DISCLOSURE OF THE INVENTION

The present invention is made by taking the above problems in the prior arts into consideration, and an object of the present invention is to provide a traveling equipment for a hydraulic four-wheel drive vehicle which provides a stable traction force and traveling speed, offers a long service life for a hydraulic equipment, and is economical.

In accordance with a first invention, there is provided a hydraulic four-wheel drive vehicle having a variable volume type hydraulic pump and a front wheel side hydraulic motor and a rear wheel side hydraulic motor receiving a pressurized oil from the variable volume type hydraulic pump so as to rotate and traveling in a four-wheel drive, comprising:

a closed center type front wheel side directional switching valve provided for the front wheel side hydraulic motor;
a closed center type rear wheel side directional switching valve provided for the rear wheel side hydraulic motor;
pump flow rate control means for controlling a pump discharge oil quantity so as to maintain differential pressures across the respective directional switching valves constant;
a communication oil passage for communicating a front wheel side oil passage extending from the front wheel side directional switching valve to the front wheel side hydraulic motor with a rear wheel side oil passage extending from the rear wheel side directional switching valve to the rear wheel side hydraulic motor; and
a communication valve for communicating and shutting off the communication oil passage.

A flow rate characteristic ($Q \propto A$) that "a passing flow rate Q (that is, a traveling speed) of a directional switching valve is in proportional only to an opening area A of the directional switching valve" by the front wheel side and rear wheel side directional switching valves and the variable volume type hydraulic pump can be obtained in the respective directional switching valves. In this case, when downstream side hydraulic pressure in each of the directional switching valves is different, a pressure loss is generated in the directional switching valve in a smaller side. Then, in accordance with the present invention, the communication valve is provided. When the communication valve is set at the shut-off position, chances at which the pressure loss is generated are increased, however, independent flow rates and traction forces can be applied to each of the hydraulic motors. On the other hand, when the communication valve is set at the communication position, the flow rate characteristic can be obtained in addition that the pressure loss is cancelled.

In accordance with a second invention, there is provided a traveling equipment for a hydraulic four-wheel drive vehicle as cited in the first invention, further comprising:

vehicle speed detecting means for detecting a vehicle speed; and
control means for receiving a detected vehicle speed from the vehicle speed detecting means so as to set the communication valve at a communication position when the detected vehicle speed is equal to or more than a standard vehicle speed.

In accordance with the structure mentioned above, the control means sets the communication valve at the communication position when the relation that the detected vehicle speed $\geq$ the standard vehicle speed is established, and the flow rate characteristics mentioned above can be also obtained while canceling the pressure loss. In this case, when the relation the detected vehicle speed < the standard vehicle speed is established, it can be replaced by the time of traveling at a low speed, and when the relation the detected vehicle speed $\geq$ the standard vehicle speed is established, it can be replaced by the time of traveling at a high speed.

A great traction force is necessary at a time of traveling at a low speed, so that the rate between a flow rate of the front wheel side hydraulic motor and a flow rate of the rear wheel side hydraulic motor can be kept constant by employing the flow rate characteristic mentioned above. On the other hand, at a time of traveling at a high speed, a high speed rotation of each of the hydraulic motors is required rather than the rate of the flow rate, so that it is not preferable on an efficiency that the pressure loss is generated. The present invention corresponds to a structure embodying the first invention mentioned above by employing a parameter of the detected vehicle speed from the vehicle speed detecting means.

In accordance with a third invention, there is provided a traveling equipment for a hydraulic four-wheel drive vehicle as cited in the first invention, further comprising:

vehicle speed detecting means for detecting a vehicle speed; and

at least any one of acceleration pedaling angle detecting means for detecting an acceleration pedaling angle and traction force detecting means for detecting a traction force; and

control means for receiving a detected vehicle speed from the vehicle speed detecting means so as to set the communication valve at a communication position when the detected vehicle speed is equal to or more than a standard vehicle speed and receiving at least any one of signals of a detected pedaling angle from the acceleration pedaling angle detecting means and a detected traction force from the traction force detecting means so as to change the standard vehicle speed in response to a value of the signal.

Even in a normal low speed traveling, it is preferable to change the standard vehicle speed in accordance with a loading weight of the vehicle and a condition of the road surface. In this case, setting the communication valve at the shut-off position corresponds to setting each of the hydraulic motors in a differential lock-up state, and setting the communication valve at the communication position corresponds to setting each of the hydraulic motors in a differential state. There is a case that it is desired to extend the differential lock-up state at a time of traveling at a low speed to a medium speed traveling for example while the vehicle climbs up or down a slope. In accordance with the present invention, there is provided the control means which can suitably change the standard vehicle speed on the basis of the traction force and the acceleration pedaling angle corresponding to an index expressing the traveling load of the vehicle, whereby it is possible to perform an appropriate traveling even when the road surface condition is continuously changed.

In accordance with a fourth invention, there is provided a traveling equipment for a hydraulic four-wheel drive vehicle as cited in the second or third invention, wherein

at least any one of the front wheel side hydraulic motor and the rear wheel side hydraulic motor is a variable volume type hydraulic motor, and the control means is control means for changing a displacement of the variable volume type hydraulic motor when the communication valve is set at the communication position.

In accordance with the structure mentioned above, it is possible to increase the vehicle speed at a time of traveling in a four-wheel drive without enlarging the volume of the variable volume pump by setting at least any one of the front wheel side hydraulic motor and the rear wheel side hydraulic motor to the variable volume type and employing the communication valve.

Further, it is possible to prevent an efficiency from lowering due to the pressure loss even when the volume ratio between the respective hydraulic motors is not constant by setting both of the front wheel side hydraulic motor and the rear wheel side hydraulic motor to a variable volume type and employing the communication valve.

BRIEF DESCRIPTION OF THE DRAWINGS

Fig. 1 is a hydraulic circuit diagram of a traveling equipment for a hydraulic four-wheel drive vehicle in accordance with an embodiment of the present invention;

Fig. 2 is a schematic view of a hydraulic circuit in which accelerator pedaling angle detecting means is added to the embodiment;

Fig. 3 is a schematic view of a hydraulic circuit in which accelerator pedaling angle detecting means and traction force detecting means are added to the embodiment;

Fig. 4 is a graph showing an operation state of a communication valve with respect to a vehicle speed;

Fig. 5 is a graph showing a volume change of each of front and rear wheel side hydraulic motors with respect to a vehicle speed;

Fig. 6 is a graph showing a flow rate to a front wheel side hydraulic motor with respect to a vehicle speed;

Fig. 7 is a graph showing a flow rate to a rear wheel side hydraulic motor with respect to a vehicle speed; and

Fig. 8 is a graph showing a flow rate to the front and rear wheel side hydraulic motors by overlapping Figs. 6 and 7.

## BEST MODE FOR CARRYING OUT THE INVENTION

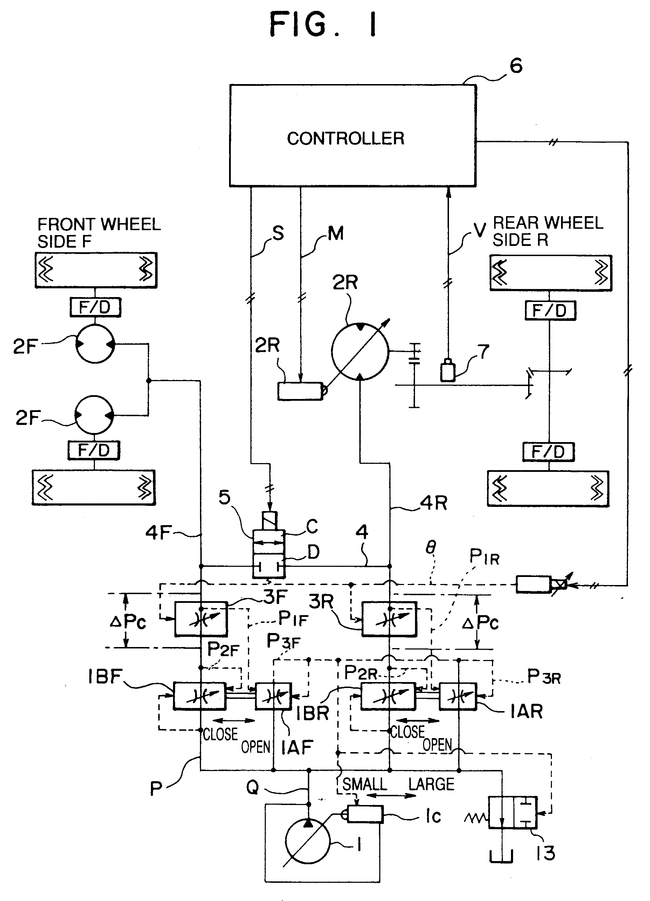

A traveling equipment for a hydraulic four-wheel drive vehicle in accordance with an embodiment of the present invention will be described below with reference to Figs. 1 to 8.

This vehicle corresponds to a wheel type hydraulic excavating vehicle traveling on a bumpy road surface, as shown in Fig. 1, have a hydraulic pump 1, and a hydraulic motor 2F in a front wheel side F and a hydraulic motor 2R in a rear wheel side R receiving a pressurized fluid from the hydraulic pump 1 so as to rotate, and travels in a four-wheel drive.

The hydraulic motor 2F is a fixed volume type and receives a pressurized fluid from a closed center type directional switching valve 3F. On the other hand, the hydraulic motor 2R is a variable volume type and receives a pressurized fluid from a closed center type directional switching valve 3R. Each of the directional switching valves 3F and 3R receives a pedaling angle signal θ of an accelerator pedal (not shown) provided in a driver's seat so as to change each of opening areas A in correspondence to a magnitude thereof, and transmit the pressurized fluid from the hydraulic pump 1 to each of the hydraulic motors 2F and 2R so as to travel in a four-wheel drive. The hydraulic pump 1 is a variable volume type and a discharge amount Q thereof is controlled so that a differential pressure ΔP between a front and a rear in each of the directional switching valves 3F and 3R becomes a fixed differential pressure ΔPc.

A communication oil passage 4 is provided between a fluid passage 4F extending from the directional switching valve 3F to the hydraulic motor 2F and a fluid passage 4R extending from the directional switching valve 3R to the hydraulic motor 2R, and a communication valve 5 is interposed in the communication oil passage 4. The communication valve 5 has a communication position C and a shut-off position D, and is maintained at the communication position while receiving a signal S from a controller 6 corresponding to the control means.

A rotational number of the hydraulic motor 2R is detected by a vehicle speed sensor 7 corresponding to the vehicle speed detecting means as a vehicle speed V, and is input to the controller 6. The controller 6 is a micro computer or the like, previously stores a standard vehicle speed signal V0 and inputs the signal S to the communication valve 5 so as to set the communication valve 5 at the communication position C when the vehicle speed signal V is equal to or more than the standard vehicle speed V0 (V ≧ V0). Further, the controller 6 receives the pedaling angle signal θ of the accelerator pedal and in order to set a displacement of the hydraulic motor 2R in inverse proportion to a magnitude of the pedaling angle, inputs a signal M to a servo mechanism 2Rc of the hydraulic motor 2R when the communication valve 5 is at the communication position C.

Here, the reason why each of the directional switching valves 3F and 3R are the closed center type will be described below.

In general, a passing flow rate Q0 in the orifice is in proportion to the product of an opening area A of the orifice and a square root of the differential pressure ΔP between front and rear in the orifice.

$$Q \propto A \cdot \Delta P^{1/2}$$

In this case, if it is possible to set the differential pressure ΔP between front and rear to a fixed differential pressure ΔPc, the passing flow rate Q0 is in proportion only to the opening area A0. That is, the following flow rate characteristic can be obtained.

$$Q \propto A$$

Then, the opening area of the orifice corresponds to the opening area of each of the directional switching valves 3F and 3R in accordance with this embodiment.

In this case, in general, the directional switching valves can be divided broadly into an open center type and a closed center type. In the open center type, at a neutral position of the directional switching, since the oil passage from the hydraulic pump is connected to a tank so as to drain all the amount, it is hard to obtain the fixed differential pressure ΔPc as an initial value. Next, since a part of the fluid amount is drained to the tank also during a switching operation from the neutral position to the operation position, it is hard to obtain the fixed differential pressure ΔPc. That is, in accordance with the open center type, it is hard to obtain a flow rate characteristic (Q ∝ A), that is, from the hydraulic pump to the actuator, "the passing flow rate Q0 is in proportion only to the opening area A0".

On the other hand, in the closed center type, even at the neutral position of the directional switching, since the oil passage from the hydraulic pump is not connected to the tank, it is easy to secure the fixed differential pressure Δ Pc as an initial value. During the switching operation from the neutral position to the operation position, since all the amount flows into an actuator in accordance that an unload valve 13 is closed, it is easy to secure the fixed differential pressure ΔPc at this time. That is, in the closed center type, it is possible to control so that a flow rate characteristic (Q ∝ A), that is, "the passing flow rate Q0 is in proportion only to the opening area A0" can be obtained. This is a reason why each of the directional switching valves 3F and 3R is set to be the closed center type.

Next, the structure of the hydraulic pump 1 made such that a discharge amount Q is controlled so that a differential pressure ΔP between a front and a rear in each of the directional switching valves 3F and 3R becomes a fixed differential pressure ΔPc will be described below.

A variable throttle 1BF with a pressure reduction valve 1AF is provided between the hydraulic pump 1 to the directional switching valve 3F. Then, a hydraulic pressure P1F in a downstream side of the directional switching valve 3F applies an urging force to a left side of the pressure reduction valve 1AF in the drawing, a hydraulic pressure P2F in an upstream side of the directional switching valve 3F applies an urging force to a right side of the variable throttle 1BF in the drawing, and a discharge pressure Pp of the hydraulic pump 1 applies an urging force to a left side of the variable throttle 1BF in the drawing, respectively. The reduction valve 1AF receives the hydraulic pressure P1F as a hydraulic force for setting a pressure reduction value and reduces the discharge pressure Pp of the hydraulic pump 1 so as to generate a hydraulic pressure P3F equal to the hydraulic pressure P1F (P3F = P1F). The hydraulic pressure P3F applies an urging force to a right side of the pressure reduction valve 1AF itself in the drawing and a servo mechanism 1c of the hydraulic pump 1. That is, a whole of the variable throttle 1BF with the pressure reduction valve 1AF is structured such as to be integrally moved in a lateral direction in the drawing so as to be balanced in the following relation due to each of the hydraulic pressures mentioned above.

$$(P3F - P1F) = (Pp - P2F)$$

In this case, the variable throttle 1BF is fully opened by being moved in a rightward direction and fully closed by being moved in a leftward direction. On the contrary, the pressure reduction valve 1AF is structured such that right and left pressure receiving areas are the same and then the right and left pressure receiving areas in the variable throttle 1BF are adjusted so as to be fully opened by moving the variable throttle 1BF in the rightward direction when the following relation is established.

$$P3F = P1F$$

In this case, the structure can be made such that the pressure receiving areas are equal to each other and a weak spring for urging in a rightward direction in the drawing is provided. Since the rear wheel side R has the same structure as that of the front wheel side F mentioned above, corresponding reference symbols are attached to corresponding elements and an overlapping explanation will be omitted. Further, in accordance with the structure mentioned above, the hydraulic pressure P3F and the hydraulic pressure p3R are generated in the same fluid passage.

Next, the servo mechanism 1c of the hydraulic pump 1 is provided with an urging spring (not shown) corresponding to the fixed differential pressure $\Delta$Pc, receives the hydraulic pressure P3F and the discharge pressure Pp and operates so as to maintain the following relation.

$$(\Delta Pc + P3F) = Pp$$

The above relation can be rewritten to the following relation.

$$(Pp - P3F) = \Delta Pc$$

Further, since the relation that Pp = P2F and P3F = P1F is established due to a full open of the variable throttle 1BF, it can be rewritten to the following relation.

$$(P2F - P1F) = \Delta Pc$$

Still further, since the relation that (P2F - P1F) = $\Delta$P is established, it can be rewritten to the following relation.

$$\Delta P = \Delta Pc$$

In this case, if the hydraulic pressure P1F is increased, the differential pressure $\Delta$P between the front and the rear becomes small ($\Delta$P < $\Delta$Pc), however, at this time, the servo mechanism 1c increases a volume of the hydraulic pump 1 (that is, increases a discharge amount) so as increase the discharge pressure Pp. Then, the pressure increase is performed until the relation $\Delta$P = $\Delta$Pc is established.

On the other hand, if the hydraulic pressure P1F is decreased, the differential pressure $\Delta$P between the front and the rear becomes great ($\Delta$P > $\Delta$Pc), however, at this time, the servo mechanism 1c decreases a volume of the hydraulic pump 1 (that is, decreases a discharge amount) so as decrease the discharge pressure Pp. The pressure decrease is performed until the relation $\Delta$P = $\Delta$Pc is established. That is, the servo mechanism 1c operates so as to maintain the relation $\Delta$P = $\Delta$Pc. Accordingly, the directional switching valve 3F can obtain the flow rate characteristic (Q ∝ A), that is, the passing flow rate Q0 is in proportion only to the opening area A0.

The above corresponds to the description when the front wheel side F and the rear wheel side R are under the same load (P1F = P1R). However, the same load condition mentioned above can momentarily occur but is not realistic. Actually, the relation is P1F > P1R, P1F >> P1R, P1F < P1R or P1F << P1R. A cooperation between the servo mechanism 1c, the variable throttle 1BF with the pressure reduction valve 1AF and the variable throttle 1BR with the pressure reduction valve 1AR in the state mentioned above will be next described.

At first, if only the load in the rear wheel side R is increased (P1F < P1R), the relation becomes P3F < P3R in accordance therewith. Here, it is necessary to remember the description "the hydraulic pressure P3F and the hydraulic pressure P3R are generated in the same fluid passage". The higher hydraulic pressure P3R controls the serve mechanism 1c and increases the discharge pressure Pp so as to set the differential pressure ΔP between the front and the rear in the directional switching valve 3R to the fixed differential pressure ΔPc. The discharge pressure Pp is going to be applied also to the directional switching valve 3F at the same time. However, in this pressure reduction valve 1AF, since the hydraulic pressure P3R is applied to the right side and the hydraulic pressure P1F is applied to the left side, respectively, as an urging force, the variable throttle 1BF is going to move in a leftward direction. That is, the variable throttle 1BF is going to fully close the conduit for the discharge pressure Pp, and set the relation Pp = P2f to the relation Pp > P2F. The variable throttle 1BF stops the operation at the throttling position balanced in the following relation.

$$(P3F - P1F) = (Pp - P2F)$$

That is, also in the directional switching valve 3F, the relation becomes ΔP = ΔPc .

On the contrary, if only the load in the rear wheel side R is decreased (P1F > P1R), the variable throttle 1BR is throttled so that in the directional switching valve 3R, the relation becomes ΔP = ΔPc .

Further, when only the load in the front wheel side F is increased and decreased, in each of the directional switching valves 3F and 3R, the relation becomes ΔP = ΔPc due to the same operation as that in the case of the rear wheel side R mentioned above.

As mentioned above, even when the load in each of the directional switching valves 3F and 3R increases and decreases, a flow rate characteristic (Q ∝ A), that is, "the passing flow rate Q0 is in proportion only to the opening area A0" can be obtained. Particularly speaking, even when a load against the front and rear wheels is different due to a difference of the nature of the ground between the front and rear wheels, a bumpy road surface and the like, it is possible to travel in a four-wheel drive by a flow rate corresponding to the pedaling angle θ of the accelerator pedal. For example, even when one or both of the wheels is in a light-load state or a no-load state, an abnormal racing is not caused, and however the load changes, a stable traction force and traveling speed can be obtained and a long service life of a hydraulic equipment can be obtained. Further, there is obtained an effect that it is economical since only one hydraulic pump is necessary.

In this case, the pump flow rate control means for controlling a pump discharge fluid amount in accordance with this embodiment is structured such as to include the serve mechanism 1c, the variable throttle 1BF with the pressure reduction valve 1AF and the pressure reduction throttle 1BR with the pressure reduction valve 1AR.

In this case, the matter that each of the variable throttles 1BF and 1BR is operated means that a great pressure loss (an energy loss) is generated there. In Accordance with this embodiment, in order to cancel the pressure loss while maintaining the effects mentioned above, the communication valve 5 is provided in the hydraulic passage 4F extending from the directional switching valve 3F to the hydraulic motor 2F and a fluid passage 4R extending from the directional switching valve 3R to the hydraulic motor 2R.

In this case, when the communication valve 5 is set at the shut-off position D, the flow rate characteristic (Q ∝ A) can be obtained, however, it takes the pressure loss therewith. On the other hand, when the communication valve 5 is set at the communication position C, the following relation can be established in any cases, so that each of the variable throttles 1BF and 1BR is not operated, and the pressure loss can be lost.

$$P1F = P1R$$

In the communication position C, the flow rate characteristic (Q ∝ A) can be always obtained.

Further, in accordance with this example, the communication valve 5 is controlled by the controller 6 so as to perform an optimum operation. That is, it is structured such that the vehicle speed sensor 7 is mounted in an output shaft of the hydraulic motor 2R and the controller 6 receives the vehicle speed V from the vehicle speed sensor 7 and compares with the standard vehicle speed V0 so as to set the communication valve 5 at the shut-off position D when the relation V < V0 is established and set the communication valve 5 at the communication position C when the relation V ≧ V0 is established. In accordance with this structure, the following effects can be obtained.

(1) At a time of a low speed traveling (V < V0), for example, at a traveling start time, a climbing time, a time of traveling on a bumpy road surface, a time of loading too much weight and the like, the front and rear wheels are independent from each other and a high traction force is required even when the pressure loss is generated in the variable throttle 1BF. That is, at a time of a low speed traveling, a flow rate independent from each other can be applied to each of the hydraulic motors 2F and 2R and a high traction force independent from each other can be applied to the front and rear wheels by setting the communication valve 5 at the shut-off position D.

(2) At a time of a high speed traveling (V ≧ V0), it is not necessary that the front and rear wheels have the high traction force independent from each other, but it is sufficient that both of the hydraulic motors 2F and 2R rotate at a high speed even in the low torque. That is, at a time of a high speed traveling, a flow rate corresponding to a high speed traveling is applied to each of the hydraulic motors 2F and 2R and a balanced traction force and can be applied to the front and rear wheels by setting the communication valve 5 at the communication position C.

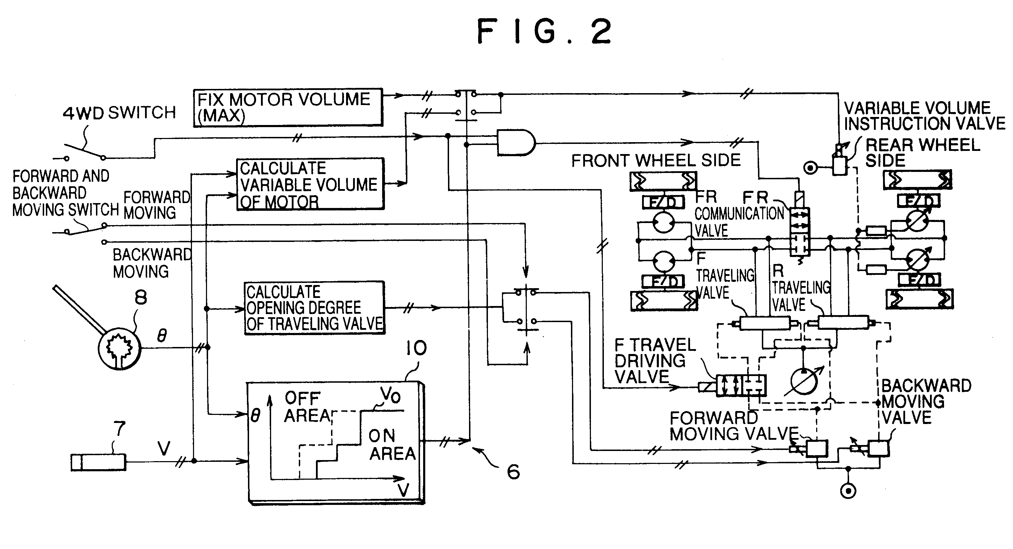

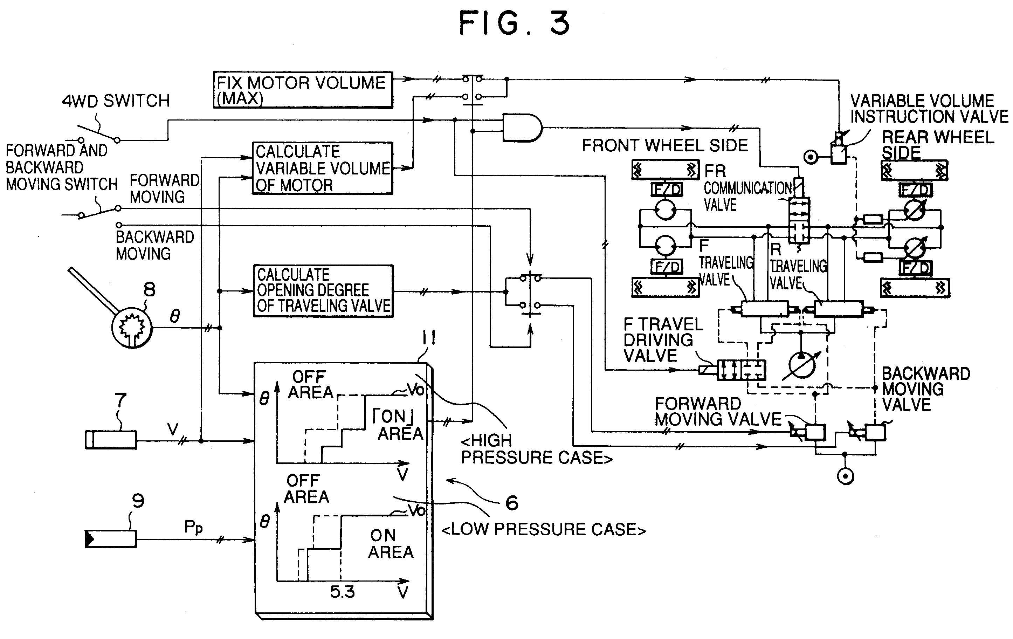

In this case, it is desirable the standard vehicle speed signal V0 corresponding to a standard for judging the switching of the communication valve 5 is suitably changed in response to the traveling aspect of the vehicle and the road surface condition. That is, the traveling in a state that the communication valve 5 is at the shut-off position D corresponds to a so-called differential lock-up travel and the traveling in a state that the communication valve 5 is at the communication position corresponds to a differential travel, however, for example, when the vehicle climbs up the slope, it is desired to maintain a differential travel even at a middle speed. Accordingly, it is necessary to suitably change the standard vehicle speed signal V0 on the basis of the index showing the degree of the high traction force. As the index, the discharge pressure signal Pp of the hydraulic pump 1 corresponding to the traction force itself (or the input hydraulic pressure signal of each of the hydraulic motors 2F and 2R), the pedaling angle signal θ of the acceleration pedal and the like can be exemplified. A summary of the changing of the standard vehicle speed signal V0 will be described below with reference to Figs. 2 and 3.

Fig. 2 is an embodiment in which the controller 6 inputs the pedaling angle signal θ from the accelerator pedaling angle sensor 8 corresponding to the accelerator pedaling angle detecting means provided with the acceleration pedal (not shown) and changes the standard vehicle speed signal V0 step by step on the basis thereof as shown in a communication valve switching map 10.

Fig. 3 is an embodiment in which the controller 6 inputs the discharge pressure signal Pp from the pump discharge pressure sensor 9 corresponding to the traction force detecting means provided in the hydraulic pump 1 (or the input pressure signal of each of the hydraulic motors 2F and 2R) in addition to the pedaling angle signal θ and more finely change the standard vehicle speed signal V0 step by step in such a manner as to separate the case into a high pressure case and a low pressure case.

In this case, the controller 6 may input the discharge pressure signal Pp (or the input pressure signal of each of the hydraulic motors 2F and 2R) in place of the pedaling angle signal θ shown in Fig. 2 and change the standard vehicle speed signal V0 step by step. The travel more aligning with the traveling condition can be performed by suitably changing the standard vehicle speed signal V0 in the above manner.

In this case, if the volume of the hydraulic pump 1 is made larger such that it does not become a maximum volume even when the vehicle speed V is the standard vehicle speed signal V0, a control which can obtain the flow rate characteristic (Q ∝ A), that is, "the passing flow rate Q0 is in proportion only to the opening area A0" can be performed. However, it is economical itself that the number of the hydraulic pump 1 is set to 1, however, it is uneconomical to make the volume lager for obtaining a room.

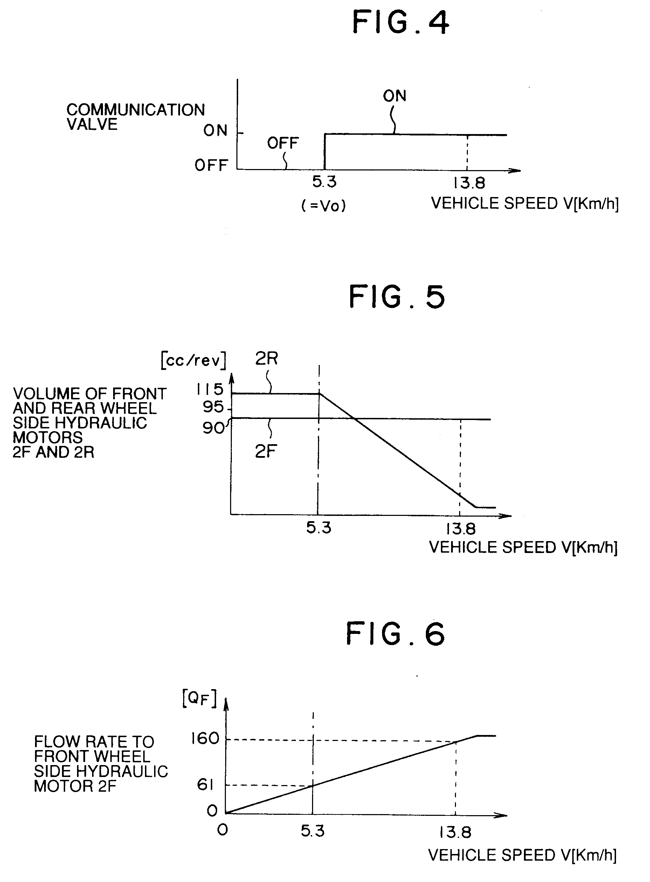

Accordingly, in this embodiment, the hydraulic motor 2R is set to be a variable volume type hydraulic motor, and the controller 6 inputs the signal M to the servo mechanism 2R1 so as to change the displacement of the hydraulic motor 2R in correspondence to the vehicle speed signal V when the communication valve 5 is at the communication position C. This operation will be described below with reference to Figs. 4 to 8.

Fig. 4 shows an operation state of the communication valve 5 with respect to the vehicle speed V. The controller 6 switches the communication valve 5 from the shut-off position D to the communication position C when the vehicle speed V is turned from the low speed side to the standard vehicle speed V0 (= 5.3 km/h). That is, the controller 6 previously stores the standard vehicle speed V0, and makes the communication valve 5 in an OFF state (to shut) at a time of V < V0 and in an ON state (to communicate) at a time of V ≧ V0.

Fig. 5 shows a volume change of the hydraulic motors 2F and 2R with respect to the vehicle speed V. The controller 6 fixes the volume of the hydraulic motor 2R to a maximum value at a time of V < V0, and gradually reduces the volume at a time of V ≧ V0 in accordance with an increase of the vehicle speed V, thereby making it possible to travel at a high speed. Since the hydraulic motor 2F is a fixed volume type, a volume is constant.

Fig. 6 shows a flow rate QF to the hydraulic motor 2F with respect to the vehicle speed V. At a time of V < V0, the flow rate QF is increased or decreased in proportion to a magnitude of the opening area A of the directional switching valve 3F which is based on the pedaling angle θ of the accelerator pedal, not by a command from the controller 6. At a time of V ≧ V0, the communication valve 5 is in an ON state and an increased or decreased amount of a volume of a hydraulic motor 2R described below is added, so that the flow rate is increased and decreased. In this case, as shown in Fig. 1, since two hydraulic motors 2F are provided, a vertical axis in Fig. 6 describes a total flow rate of two hydraulic motors 2F.

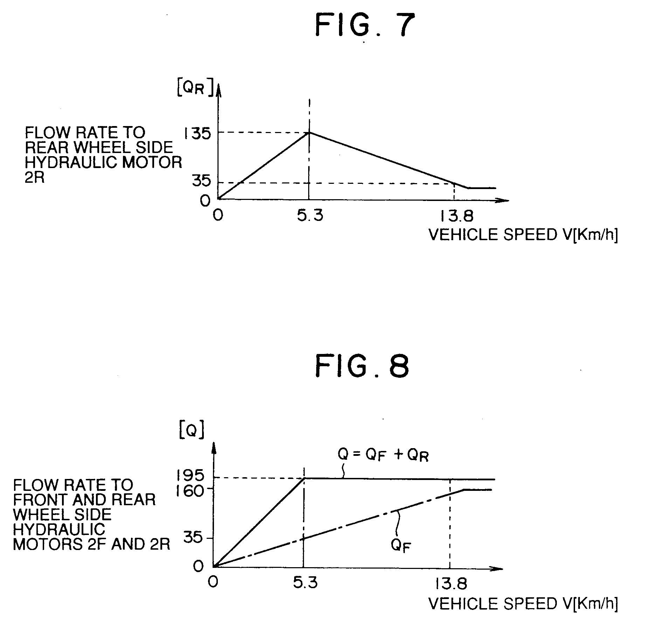

Fig. 7 shows a flow rate QR to the hydraulic motor 2R with respect to the vehicle speed V. At a time of V < V0, the volume of the hydraulic motor 2R is fixed to a maximum value, the flow rate QF during the period is in proportion to a magnitude of the opening area A of the directional switching valve 3F which is based on the pedaling angle signal θ of the accelerator pedal, not to a command from the controller 6, and increased and decreased. At a time of V ≧ V0, the controller 6 receives the pedaling angle θ of the accelerator pedal and inputs the signal M to the serve mechanism 2Rc in the hydraulic motor 2R so as to set the displacement of the hydraulic motor 2R in inversely proportional to the magnitude of the pedaling angle. That is, in accordance with pedaling the accelerator pedal, the volume of the hydraulic motor 2R is increased and decreased so as to make the vehicle speed high.

An effect in accordance with the structure mentioned above will be described below with reference to Fig. 8 which shows a flow rate Q (= QF + QR) to each of the hydraulic motors 2F and 2R with respect to the vehicle speed V.

The flow rate Q at a time of V < V0 is constant. That is, in accordance with this embodiment, the time when the vehicle speed V becomes the standard vehicle speed V0 corresponds to the maximum discharge amount Q of the hydraulic pump 1, that is, the opening areas of each of the directional switching valves 3F and 3R is maximum and the high speed traveling can be achieved by making the volume of the hydraulic motor 2R small. In this case, the following description is given by setting a speed reduction ratio from each of the hydraulic motors 2F and 2R to the front and rear wheel to 1, respectively.

(1) It is possible to increase a vehicle speed at a time of traveling in a four-wheel drive without enlarging the volume of the variable volume pump 1 by setting any one of the front wheel side hydraulic motor 2F and the rear wheel side hydraulic motor 2R to be a variable volume type hydraulic motor and employing the communication valve 5.

In the case that the communication valve 5 is not present and the hydraulic motor 2R is a fixed volume type, it is necessary to set each of the directional switching valves 3F and 3R and each of the hydraulic motors 2F and 2R to be mutually the same size. Further, since the vehicle speed V is dependent on the flow rate characteristic (Q ∝ A), that is, the passing flow rate Q0 is in proportion only to the opening area A0, it is necessary to make the pump discharge amount great in order to increase the vehicle speed at a time of traveling in a four-wheel drive. Since the hydraulic pump 1 is enlarged in accordance with this, it is significantly uneconomical. However, in the case that the communication valve 5 is present and the hydraulic motor 2R is a variable volume type, it is possible to perform a high speed traveling without making the pump discharge amount great by making the volume of the hydraulic motor 2R small and setting the communication valve 5 in the communication state.

(2) It is possible to prevent an efficiency from lowering due to the pressure loss even when the volume ratio between the respective hydraulic motors 2F and 2R is not constant by setting both of the front wheel side hydraulic motor 2F and the rear wheel side hydraulic motor 2R to a variable volume type hydraulic motor and employing the communication valve 5 so as to set at the communication position C.

In the case that the communication valve 5 is not present and both of the front wheel side hydraulic motor 2F and the rear wheel side hydraulic motor 2R are set to the variable volume type hydraulic motors so as to increase the vehicle speed at a time of traveling in a four-wheel drive, it can be realized by making the volume of each of the hydraulic motors 2F and 2R, however, since the pressure loss is generated when the volume of each of the hydraulic motors 2F and 2R and the volume ratio therebetween are not made constant, reduction of an efficiency is indispensable. However, the pressure loss can be prevented and the four-wheel drive traveling with a good efficiency can be realized by providing the communication valve 5 and making the volume of each of the hydraulic motors 2F and 2R small and in the communication state.

Here, in accordance with this embodiment, each of the variable throttles 1BF and 1BR is provided in an upstream side of each of the directional switching valves 3F and 3R, each of the variable throttles 1BF and 1BR receives the maximum hydraulic pressure among the hydraulic pressures in the downstream side of each of the directional switching valves 3F and 3R and the throttling degree is adjusted so as to increase the hydraulic pressure from each of the variable throttles 1BF and 1BR to each of the directional switching valves 3F and 3R and set the differential pressure ΔP between the front and the rear of each of the directional switching valves 3F and 3R to the fixed differential pressure ΔPc, thereby securing the flow rate characteristic (Q ∝ A). However, it is not necessary to limit the structure to this circuit, for example, the following circuit can be employed and the communication valve 5 and the like are provided, whereby the same effect as that of this embodiment can be also obtained.

A hydraulic circuit is structured such that each of the variable throttles 1BF and 1BR is provided in a downstream side of each of the directional switching valves 3F and 3R, each of the variable throttles 1BF and 1BR receives the maximum hydraulic pressure among the hydraulic pressures in the downstream side of each of the directional switching valves 3F and 3R and the throttling degree is adjusted so as to increase the hydraulic pressure from each of the directional switching valves 3F and 3R to each of the variable throttles 1BF and 1BR and set the differential pressure ΔP between the front and the rear of each of the directional switching valves 3F and 3R to the fixed differential pressure ΔPc, thereby securing the flow rate characteristic (Q ∝ A).

A hydraulic circuit is structured such that each of the directional switching valves 3F and 3 is provided in a meter-in side of each of the hydraulic motors 2F and 2R and each of the variable throttles 1BF and 1BR which receives the maximum hydraulic pressure among the hydraulic pressures in the downstream side of each of the directional switching valves 3F and 3R so as to adjust the throttling degree is provided in a meter-out side thereof, so as to increase the meter-out hydraulic pressure and set the differential pressure $\Delta P$ between the front and the rear to the fixed differential pressure $\Delta Pc$, thereby securing the flow rate characteristic ($Q \propto A$).

INDUSTRIAL APPLICABILITY

The present invention is useful for a traveling equipment for a hydraulic pressure type four-wheel drive vehicle which provides a stable traction force and traveling speed even when traveling on a bumpy road surface, offers a long service life for a hydraulic equipment, and is economical.

**Claims**

1.    A traveling equipment for a hydraulic four-wheel drive vehicle having a variable volume type hydraulic pump and a front wheel side hydraulic motor and a rear wheel side hydraulic motor receiving a pressurized oil from the variable volume type hydraulic pump so as to rotate and traveling in a four-wheel drive, comprising:

a closed center type front wheel side directional switching valve (3F) provided for the front wheel side hydraulic motor (2F);
a closed center type rear wheel side directional switching valve (3R) provided for the rear wheel side hydraulic motor (2R);
pump flow rate control means for controlling a pump discharge oil quantity so as to maintain differential pressures across the respective directional switching valves (3F, 3R) constant;
a communication oil passage (4) for communicating a front wheel side oil passage (4F) extending from the front wheel side directional switching valve to the front wheel side hydraulic motor with a rear wheel side oil passage (4R) extending from the rear wheel side directional switching valve to the rear wheel side hydraulic motor; and
a communication valve (5) for communicating and shutting off the communication oil passage.

2.    A traveling equipment for a hydraulic four-wheel drive vehicle as claimed in claim 1, further comprising:

vehicle speed detecting means (7) for detecting a vehicle speed; and
control means (6) for receiving a detected vehicle speed from the vehicle speed detecting means so as to set said communication valve (5) at a communication position when the detected vehicle speed is equal to or more than a standard vehicle speed.

3.    A traveling equipment for a hydraulic four-wheel drive vehicle as claimed in claim 1, further comprising:

vehicle speed detecting means (7) for detecting a vehicle speed; and
at least any one of acceleration pedaling angle detecting means (8) for detecting an acceleration pedaling angle and traction force detecting means (9) for detecting a traction force; and
control means (6) for receiving a detected vehicle speed from the vehicle speed detecting means so as to set said communication valve (5) at a communication position when the detected vehicle speed is equal to or more than a standard vehicle speed and receiving at least any one of signals of a detected pedaling angle from the acceleration pedaling angle detecting means and a detected traction force from the traction force detecting means so as to change said standard vehicle speed in response to a value of the signal.

4.    A traveling equipment for a hydraulic four-wheel drive vehicle as claimed in claim 2 or 3, wherein

at least any one of said front wheel side hydraulic motor (2F) and the rear wheel side hydraulic motor (2R) is a variable volume type hydraulic motor, and
said control means (6) is control means for changing a displacement of the variable volume type hydraulic motor when said communication valve (5) is set at the communication position.

# FIG. 1

# FIG. 2

FIX MOTOR VOLUME (MAX)

4WD SWITCH

VARIABLE VOLUME INSTRUCTION VALVE

REAR WHEEL SIDE

FORWARD AND BACKWARD MOVING SWITCH

FORWARD MOVING

CALCULATE VARIABLE VOLUME OF MOTOR

FRONT WHEEL SIDE

BACKWARD MOVING

8

θ

CALCULATE OPENING DEGREE OF TRAVELING VALVE

10

7

V

θ

OFF AREA

Vo

ON AREA

V

6

F/D

FR COMMUNICATION VALVE

FR

F TRAVELING VALVE

R TRAVELING VALVE

F TRAVEL DRIVING VALVE

BACKWARD MOVING VALVE

FORWARD MOVING VALVE

F/D

EP 0 916 541 A1

# FIG. 3

EP 0 916 541 A1

EP 0 916 541 A1

# FIG. 4

COMMUNICATION VALVE

ON

OFF

ON

OFF

5.3
(=Vo)

13.8

VEHICLE SPEED V[Km/h]

# FIG. 5

VOLUME OF FRONT AND REAR WHEEL SIDE HYDRAULIC MOTORS 2F AND 2R

[cc/rev]

2R

115
95
90

2F

5.3

13.8

VEHICLE SPEED V[Km/h]

# FIG. 6

FLOW RATE TO FRONT WHEEL SIDE HYDRAULIC MOTOR 2F

[$Q_F$]

160

61

0

O

5.3

13.8

VEHICLE SPEED V[Km/h]

14

# FIG. 7

FLOW RATE TO
REAR WHEEL SIDE
HYDRAULIC MOTOR
2R

# FIG. 8

FLOW RATE TO
FRONT AND REAR
WHEEL SIDE
HYDRAULIC
MOTORS 2F AND 2R

EP 0 916 541 A1

**INTERNATIONAL SEARCH REPORT**

International application No.

PCT/JP97/02657

| A. CLASSIFICATION OF SUBJECT MATTER |
|---|
| Int. Cl$^6$  B60K17/356 |

According to International Patent Classification (IPC) or to both national classification and IPC

| B. FIELDS SEARCHED |
|---|

Minimum documentation searched (classification system followed by classification symbols)

Int. Cl$^6$  B60K17/356

Documentation searched other than minimum documentation to the extent that such documents are included in the fields searched

| Jitsuyo Shinan Koho | 1926 - 1997 | Jitsuyo Shinan Toroku |
| Kokai Jitsuyo Shinan Koho | 1971 - 1997 | Koho 1996 - 1997 |
| Toroku Jitsuyo Shinan Koho | 1994 - 1997 | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 8-132902, A (Ishikawajima Shibaura Machinery Co., Ltd.), May 28, 1996 (28. 05. 96) | 1 |
| A | JP, 5-37542, U (Sumitomo Construction Machinery Co., Ltd.), May 21, 1993 (21. 05. 93) | 1 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| October 23, 1997 (23. 10. 97) | November 5, 1997 (05. 11. 97) |

| Name and mailing address of the ISA/ Japanese Patent Office | Authorized officer |
|---|---|
| Facsimile No. | Telephone No. |

Form PCT/ISA/210 (second sheet) (July 1992)

16